# EUROPÄISCHE PATENTSCHRIFT

(11) **EP 3 580 440 B1**
(45) Veröffentlichungstag und Bekanntmachung des Hinweises auf die Patenterteilung: **23.08.2023**
(21) Anmeldenummer: 18705588.4
(22) Anmeldetag: 09.02.2018
(51) Int. Cl.: F02B 25/14, F02B 33/04, F02M 69/04, F02B 75/02

(54) **ZWEITAKTBRENNKRAFTMASCHINE**
TWO-STROKE INTERNAL COMBUSTION ENGINE
MOTEUR À COMBUSTION INTERNE À DEUX TEMPS

(30) Priorität: 13.02.2017 DE 102017102792
(43) Veröffentlichungstag der Anmeldung: 18.12.2019
(73) Patentinhaber: KTM AG, 5230 Mattighofen (AT)
(72) Erfinder: REHRL, Christian, 5225 Jeging (AT); DROCHNER, Helmut, 5231 Schalchen (AT); MAYRHOFER, Christian, 5232 Kirchberg (AT); SPATZENEGGER, Stefan, 5223 Pfaffstätt (AT); RATHGEB, Christian, 4600 Thalheim (AT); DERNTL, Michael, 4222 St. Georgen an der Gusen (AT); HOLZLEITNER, Bernd, 5231 Schalchen (AT); GORBACH, Peter, 5162 Obertrum am See (AT); FORSTER, Martin, 5282 Ranshofen (AT); VIERTLMAYR, Michael, 5162 Obertrum (AT)
(74) Vertreter: Söllner, Udo
(86) Internationale Anmeldenummer: PCT/EP2018/053275
(87) Internationale Veröffentlichungsnummer: WO 2018/146251

(56) Entgegenhaltungen:
- WO-A1-2006/007614
- US-B1- 7 089 892
- US-B2- 6 691 649

## Beschreibung

Die vorliegende Erfindung betrifft eine Zweitaktbrennkraftmaschine nach dem Oberbegriff des Anspruchs 1.

Zweitaktbrennkraftmaschinen sind seit langer Zeit bekannt und werden auch zur Vermeidung von durch Spülverlusten entstehender HC Emissionen im Abgas einer entsprechenden Weiterentwicklung unterzogen, auch wenn die Zweitaktbrennkraftmaschine oder der Zweitaktmotor in vielen Bereichen mittlerweile vom Viertaktmotor verdrängt wurde. Aufgrund seiner hohen Leistungsdichte ist die Zweitaktbrennkraftmaschine aber nach wie vor technologisch sehr interessant und zwar insbesondere in den Bereichen, bei denen es auf eine hohe Leistungsausbeute bei geringer Masse ankommt, also beispielsweise im Bereich der Antriebsquelle von Motorrädern und hier insbesondere im Bereich von Geländesportmotorrädern, die hier aber lediglich als Beispiel genannt sind.

Anhand der US 7,16 8,401 B2 ist eine Zweitaktbrennkraftmaschine bekannt geworden, welche zur Kraftstoffversorgung des Zylinders der Motors zwei Injektoren aufweist, von denen ein erster Injektor Kraftstoff direkt in den Brennraum einspritzen kann und der andere Injektor Kraftstoff in den Überströmkanal einspritzen kann und zwar in Richtung der aus dem Kurbelgehäuse des Motors durch den Überströmkanal in Richtung zum Brennraum strömenden Fluidströmung. Es bedeutet dies mit anderen Worten, dass der Kraftstoff in den Überströmkanal in Strömungsrichtung eingespritzt wird.

Anhand der DE 10 2004 002 161 B4 ist eine Zweitaktbrennkraftmaschine bekannt geworden, bei der ein Gemisch aus Kraftstoff und Schmieröl über ein Einspritzelement eingespritzt wird, welches mindestens zwei Einspritzstrahlen ausbildet, von denen ein erster Einspritzstrahl in den Überströmkanal in Strömungsrichtung aus dem Kurbelhaus in Richtung zum Brennraum und ein zweiter Einspritzstrahl in Richtung zur Kurbelkammer gerichtet wird.

Anhand der DE 102 29 365 B4 ist ein Zweitaktmotor bekannt geworden, bei dem der Kraftstoff über einen Injektor in einen Überströmkanal eingespritzt wird und zwar in den Bereich unterhalb eines Einlassfensters oder auch auf der Höhe des Einlassfensters oder Überströmfensters.

Anhand der EP 0 302 045 B2 ist eine Zweitaktbrennkraftmaschine bekannt geworden, bei der der Kraftstoff mittels zweier Einspritzdüsen auf den Kolbenboden und bei hohen Drehzahlen in den Überströmkanal eingespritzt wird.

Anhand der DE 10 2008 019 157 A1 ist eine Zweitaktbrennkraftmaschine bekannt geworden, bei der der Kraftstoff entgegen der Strömungsrichtung aus dem Kurbelgehäuse in den Brennraum in den Überströmkanal eingespritzt wird.

Anhand der US 7,08 9,892 B1 ist ein Fahrzeug mit einem Zweitaktmotor bekannt geworden, bei dem der Kraftstoff über einen ersten Injektor in das Kurbelgehäuse und über einen zweiten Injektor in den Überströmkanal eingetragen werden kann und zwar in einem nach oben gerichteten Winkel, also in Strömungsrichtung aus dem Kurbelgehäuse in den Brennraum der Brennkraftmaschine betrachtet, also nicht entgegen der Strömungsrichtung aus dem Kurbelgehäuse in den Brennraum.

Anhand der DE 102 20 555 B4 ist ein Zweitaktmotor bekannt geworden, bei dem der Kraftstoff im Leerlauf in das Kurbelgehäuse und zu vorgegebenen Steuerzeiten in den Überströmkanal eingespritzt wird und zwar in das dem Brennraum zugewandte Ende des Überströmkanals, also quer zur Überströmrichtung.

Anhand der US 6,691,649 B2 ist eine Zweitaktbrennkraftmaschine bekannt geworden, die mit zwei Injektoren pro Zylinder arbeitet und bei der der Kraftstoff in den Überströmkanal eingespritzt wird und zwar im Bereich des Einlassfensters aus dem Überströmkanal zum Zylinder und zwar in den Luftstrom, der vom Überströmkanal in den Zylinder strömt.

Schließlich ist anhand der WO 2006/007614 A1 ein Zweitakt-Verbrennungsmotor bekannt geworden, bei der der Kraftstoff in den Überströmkanal eingespritzt wird und zwar weitgehend entgegen der Überströmrichtung aus dem Kurbelgehäuse in den Brennraum und bei der es also zu einer Gemischbildung außerhalb des Kurbelgehäuses des Zylinders kommt.

Eine Zweitaktbrennkraftmaschine zeichnet sich durch eine hohe Leistungsdichte aus und besitzt in Sachen des zur Erbringung der hohen Leistungsdichte benötigten Kraftstoffs eine hohe Spreizung, benötigt also im Bereich niedriger Drehzahlen und niedriger Last wenig Kraftstoff, während er im Bereich hoher Drehzahlen hoher Lasten einen hohen Kraftstoffbedarf aufweist.

Dieses Problemfeld wurde bei den bekannten Zweitaktbrennkraftmaschinen allenfalls am Rande dadurch zu lösen versucht, dass bei hohem Kraftstoffbedarf der Kraftstoff entweder in dem Brennraum direkt eingespritzt wird oder in den Bereich des Überströmkanals, der über das Überströmfenster direkt mit dem Brennraum verbunden ist. Im erstgenannten Fall wird der Kraftstoff direkt in den Brennraum eingetragen und im zweitgenannten Fall weitgehend direkt über das Überströmfenster in den Brennraum, sodass es zu Zonen mit hoher Kraftstoff-Luftkonzentration kommt, was zwar einerseits der Entflammbarkeit des Gemisches entgegenkommt, andererseits aber die Gefahr von hohen HC Konzentrationen im Abgas des Motors erhöht.

Wird darüber hinaus der Kraftstoff aufgrund der nur sehr kurzen Zeit der Öffnung des Überströmfensters mit hohen Einspritzdrücken in dem Brennraum eingebracht, so besteht die Gefahr, dass es zu Wandablagerungen des eingespritzten Kraftstoffs an der dem Überströmfenster gegenüberliegenden Zylinderwand im Brennraum kommt, was einerseits die Gefahr des Abwaschens des zum Betrieb des Zweitaktmotors benötigten Zweitaktöls von der Brennraumwand erhöht - und damit die Gefahr von Kolbenklemmern erhöht - und andererseits aufgrund der Wandablagerungen des Kraftstoffs an der Brennraumwand die HC Emissionen im Abgas wieder erhöht. Auch bei der Direkteinspritzung des Kraftstoffs in den Brennraum liegen diese Gefahren vor.

Ausgehend hiervon liegt der vorliegenden Erfindung die Aufgabe zu Grunde, einen Zweitaktmotor zu schaffen, der die vorstehend genannten Probleme beseitigt und sich durch einen einfachen Aufbau auszeichnet und Zweitakt-typische Spülverluste vermeidet und zur Realisierung einer hohen Leistungsausbeute über den gesamten Last- und Drehzahlbereich bedarfsgerecht mit Kraftstoff versorgt werden kann.

Die Erfindung weist zur Lösung dieser Aufgabe die im Anspruch 1 angegebenen Merkmale auf, vorteilhafte Ausgestaltungen hiervon sind in den weiteren Ansprüchen beschrieben. Auch schafft die Erfindung ein Verfahren zum Betrieb einer Zweitaktbrennkraftmaschine nach dem Anspruch 14 und ein Motorrad mit einer Zweittaktbrennkraftmaschine nach der Erfindung.

Die Erfindung schafft eine Zweitaktbrennkraftmaschine mit mindestens einem, mit einem Brennraum und einem Auslass versehenen Zylinder und einem mit einer Kurbelwelle versehenen Kurbelgehäuse, welches über mindestens einen Überströmkanal mit dem Brennraum strömungsverbunden ist, wobei die Brennkraftmaschine zwei Injektoren aufweist und Kraftstoff mittels nur eines Injektors bei einer ersten Motorlast und mittels beider Injektoren bei einer zweiten Motorlast einbringbar ist, wobei die Brennkraftmaschine zwei Überströmkanäle pro Zyinder aufweist, wobei der jeweilige Überstömkanal mit einem jeweiligen Injektor versehen ist und die Brennkraftmaschine zum Einspritzen von Kraftstoff in den Überströmkanal weitgehend entgegen der Überströmrichtung aus dem Kurbelgehäuse in den Brennraum ausgebildet ist.

Bei der Zweitaktbrennkraftmaschine wird also der Kraftstoff über den oder die beiden Injektoren nicht direkt in den Brennraum eingespritzt, sodass die Problematik des Abwaschens von Schmieröl von der Brennraumwand vermieden ist und es auch nicht zur Wandablagerung von Kraftstoff an der Brennraumwand kommen kann.

Durch das Einspritzen von Kraftstoff in den Überströmkanal oder Überströmer durch beide Injektoren in getrennte Überströmkanäle entgegen der Überströmrichtung aus dem Kurbelgehäuse in Richtung zum Zylinderinnenraum wird eine sehr gute Kraftstoffaufbereitung durch hohe Turbulenzen im Überströmer erreicht, wodurch der Bildung von unverbrannten Kohlenwasserstoffen (HC Emissionen) im Abgas entgegengewirkt werden kann.

Durch den Eintrag von Kraftstoff in den Überströmer mittels nur eines Injektors wird erreicht, dass einer niedrigen Kraftstoffanforderung des erfindungsgemäßen Zweitaktmotors Rechnung getragen wird, beispielsweise beim Leerlauf oder im niedrigen Lastbereich, nämlich dann, wenn der Zweitaktmotor wenig Kraftstoff benötigt. Dieser Betriebsbereich entspricht dem Betrieb des erfindungsgemäßen Zweitaktmotors bei einer ersten Motorlast.

Steigt hingegen der Kraftstoffbedarf des erfindungsgemäßen Zweitaktmotors aufgrund einer höheren Lastanforderung beispielsweise durch den Benutzer des mit dem erfindungsgemäßen Zweitaktmotor betriebenen Motorrads an, so wird der Betrieb des erfindungsgemäßen Zweitaktmotors auf die Kraftstoffeinspritzung mittels beider Injektoren pro Zylinder umgestellt, dieser Betriebsbereich entspricht dem Betrieb des erfindungsgemäßen Zweitaktmotors bei einer zweiten Motorlast, die höher ist als die erste Motorlast, bei der der Kraftstoff mittels nur eines Injektors in den Überströmer eingebracht wird.

Durch die erfindungsgemäß vorgesehene Möglichkeit, in den oder die Überströmer Kraftstoff in Abhängigkeit von der Motorlast einzutragen, wird der vorstehend erwähnten Zweitakt-spezifischen hohen Spreizung Rechnung getragen. Die Motorlast kann dabei die Sollmotorlast sein, die Motorlast also, die nach dem Wunsch des Benutzers des erfindungsgemäßen Motors vom Motor bereit gestellt werden soll, also die Arbeit die der Motor pro Arbeitsspiel leisten soll, bezogen auf das Hubvolumen eines Zylinders des Motors.

Der Benutzer des Motors nimmt auf die vom Motor zu erbringende Motorlast durch einen Drosselöffnungsquerschnitt im Ansaugluftbereich des Motors Einfluss. Der Drosselöffnungsquerschnitt wird von der Öffnung eines Drosselorgans im Ansaugluftbereich des Motors bestimmt, wobei es sich bei dem Drosselorgan im einfachsten Fall um einen Luftschieber handeln kann, mit dessen Verlagerung der Öffnungsquerschnitt des Drosselorgans verändert wird, es kann sich auch um eine Drosselklappe handeln, deren Verschwenkung um einen Drosselklappenwinkel zu einer Veränderung des Öffnungsquerschnitts des Drosselorgans führt.

Ein erster Drosselöffnungsquerschnitt kann also einer ersten Motorlast entsprechen, während ein zweiter Drosselöffnungsquerschnitt einer zweiten Motorlast entsprechen kann. Der Drosselöffnungsquerschnitt führt zu einer Veränderung des in der Kurbelkammer des Kurbelgehäuses festzustellenden Kurbelgehäusedrucks. Über die Erfassung des Kurbelgehäusedrucks kann die Umschaltung der Betriebsweise der erfindungsgemäßen Brennkraftmaschine mit einem Injektor oder mit zwei Injektoren pro Zylinder erfolgen. Ein erster Kurbelgehäusedruck, der einem ersten Drosselöffnungsquerschnitt und damit einer ersten Motorlast entspricht, führt dazu, dass dem erfindungsgemäßen Motor der Kraftstoff nur mittels Einspritzens von Kraftstoff in einen Überströmer zugeführt wird, während ein zweiter Kurbelgehäusedruck, der einem zweiten Drosselöffnungsquerschnitt und damit einer zweiten Motorlast entspricht, führt dazu, dass dem erfindungsgemäßen Motor der Kraftstoff mittels Einspritzens von Kraftstoff aus zwei Injektoren in zwei Überströmer oder in einen gemeinsamen Überströmer für beide Injektoren zugeführt wird.

Durch das Umschalten der Betriebsweise der erfindungsgemäßen Brennkraftmaschine von der Kraftstoffversorgung mit nur einem Injektor auf die Kraftstoffversorgung mit beiden Injektoren und von der Kraftstoffversorgung mit beiden Injektoren auf die Kraftstoffversorgung mit nur einem Injektor kann den spezifischen Kraftstoffanforderungen der erfindungsgemäßen Brennkraftmaschine in Abhängigkeit von der Last des Motors Rechnung getragen werden.

Es ist nach einer Weiterbildung der Erfindung auch vorgesehen, dass die Brennkraftmaschine zum alternierenden Einspritzen von Kraftstoff mittels eines der beiden Injektoren ausgebildet ist. Es bedeutet dies mit anderen Worten, dass dann, wenn zur Versorgung des erfindungsgemäßen Zweitaktmotors mit der im jeweiligen Betriebspunkt benötigten Kraftstoffmenge die Kraftstoffmenge nur mit einem Injektor zugeführt wird, der Kraftstoff beispielsweise im Verlauf einer Kurbelwellenumdrehung von einem Injektor zugeführt wird und im Verlauf der nächsten Kurbelwellenumdrehung vom anderen Injektor zugeführt wird, die beiden Injektoren also beispielsweise pro Kurbelwellenumdrehung alternierend zur Kraftstoffzufuhr eingesetzt werden. Es ist auch möglich, dass der Kraftstoff beispielsweise während einer vorbestimmten Zahl von Kurbelwellenumdrehungen mittels des einen Injektors zugeführt wird und der Kraftstoff während einer darauffolgenden Zahl von Kurbelwellenumdrehungen mittels des anderen Injektors zugeführt wird.

Diese Vorgehensweise hat den Vorteil, dass bei einer kleinen Motorlast eine optimierte Kraftstoffmengenbemessung erreicht wird und dass Verschmutzungen eines ansonsten für eine längere Zeitdauer nicht von Kraftstoff durchströmten Injektors vorgebeugt werden kann. Solche Verschmutzungen können beispielsweise die Folge von Abgas im Kurbelhaus aufgrund von blow-by Effekten sein oder auch die Folge von für den Betrieb des Zweitaktmotors benötigten Schmieröls, welches in das Kurbelgehäuse eingetragen wird. Durch die alternierende Benutzung beider Injektoren auch bei der Zufuhr von Kraftstoff mittels nur eines Injektors kann solchen Verschmutzungen vorgebeugt werden. Auch kann etwaigen Verharzungen oder Verklebungen der Injektoren durch im Kraftstoff vorhandene Additive oder Bestandteile auf diese Weise vorgebeugt werden und es kann einer ansonsten Ungleichverteilung der mechanischen Belastung der beiden Injektoren vorgebeugt werden.

Es ist nach einer Weiterbildung der Erfindung auch vorgesehen, dass die Brennkraftmaschine zum Einspritzen von Kraftstoff während eines Kurbelwellenwinkels ausgebildet ist, der einem Teilbereich einer vollständigen Umdrehung der Kurbelwelle entspricht und der Teilbereich etwa 5 Grad Kurbelwellenwinkel bis etwa 350 Grad Kurbelwellenwinkel, vorzugsweise etwa 10 Grad Kurbelwellenwinkel bis etwa 330 Grad Kurbelwellenwinkel, vorzugsweise etwa 12 Grad Kurbelwellenwinkel bis etwa 305 Grad Kurbelwellenwinkel beträgt.

Es bedeutet dies mit anderen Worten, dass die erfindungsgemäße Brennkraftmaschine so ausgebildet ist, dass der Kraftstoff während eines Teilbereichs einer vollständigen Umdrehung der Kurbelwelle von 360 Grad Kurbelwinkel eingespritzt wird und dieser Teilbereich von einem sehr kurzen Zeitfenster von etwa nur 5 Grad Kurbelwellenwinkel bis zu einem sehr langen Zeitfenster von 350 Grad Kurbelwinkel reicht. Kraftstoff also nur während eines sehr kurzen Einspritzzeitintervalls einer vollständigen Kurbelwellenumdrehung eingespritzt wird oder auch während eines Zeitintervall, welches nahezu einer vollständigen Umdrehung der Kurbelwelle entspricht und somit Kraftstoff fast während der gesamten Zeitdauer einer vollständigen Kurbelwellenumdrehung eingespritzt wird, wodurch Kraftstoff in der Kurbelkammer des Kurbelgehäuses auch vorgelagert werden kann.

Es ist nach der Erfindung auch vorgesehen, dass das Einspritzintervall von etwa 10 Grad Kurbelwinkel bis etwa 330 Grad Kurbelwinkel reicht und es hat sich gezeigt, dass bei einer Zweitaktbrennkraftmaschine mit einem Hubvolumen von 250 cm³ sehr gute Ergebnisse erzielt werden bei einem Einspritzintervall von etwa 12 Grad Kurbelwinkel bis etwa 305 Grad Kurbelwinkel.

Es ist nach einer Weiterbildung der Erfindung auch vorgesehen, dass die Zweitaktbrennkraftmaschine zum Einspritzen von Kraftstoff mittels nur eines Injektors in einem Bereich der Motorlast der Brennkraftmaschine von etwa sieben Prozent bis etwa 40 Prozent der Maximallast der Brennkraftmaschine ausgebildet ist, wobei sich der Wert in Abhängigkeit der Motordrehzahl ändert. Der Benutzer des erfindungsgemäßen Motors kann die an den Motor gestellte Lastanforderung durch eine Veränderung des Drosselöffnungsquerschnitts eines im Ansaugluftbereich des Motors angeordneten Drosselorgans beeinflussen, sodass beispielsweise bei einer Lastanforderung von mehr als etwa 40 Prozent der Maximallast Kraftstoff mittels beider Injektoren eingespritzt wird, während bei einer Lastanforderung von weniger als etwa 40 Prozent der Maximallast Kraftstoff nur mittels eines Injektors eingespritzt wird und zwar in Abhängigkeit der jeweiligen Motordrehzahl. Wie vorstehend bereits erwähnt, kann der Kraftstoff dann im alternierenden Betrieb durch jeweils einen der beiden Injektoren eingespritzt werden. Das Umschalten vom Betrieb mit einem Injektor auf den Betrieb mit zwei Injektoren und umgekehrt erfolgt also im Bereich von etwa 7 Prozent bis etwa 40 Prozent der Last.

Die Abhängigkeit der Motordrehzahl bedeutet dabei, dass der Umschaltzeitpunkt vom Betrieb der erfindungsgemäßen Zweitaktbrennkraftmaschine mit nur einem Injektor auf den Betrieb mit beiden Injektoren pro Zylinder und das Umschalten vom Betrieb mit beiden Injektoren auf den Betrieb mit nur einem Injektor - die dann alternierend betrieben werden können - von der Motordrehzahl abhängt.

Bei niedrigen Motordrehzahlen kann also ein Injektor bis zu einer Last von etwa 40 Prozent der Maximallast des Motors reichen, während bei hohen Motordrehzahlen bereits ab einer Motorlast von etwa 7 Prozent der Maximallast auf den Betrieb mit zwei Injektoren umgeschaltet wird und der Motor im Falle einer Lastanforderung von unter 7 Prozent der Maximallast weiterhin mit nur einem Injektor betrieben werden kann.

Es ist nach einer Weiterbildung der Erfindung auch vorgesehen, dass die Brennkraftmaschine nach der Erfindung zum Einspritzen von Kraftstoff während eines mit steigender Drehzahl der Brennkraftmaschine zunehmenden Teilbereichs des einer vollständigen Umdrehung der Kurbelwelle entsprechenden Kurbelwellenwinkels ausgebildet ist.

Es bedeutet dies mit anderen Worten, dass das Zeitintervall, während dessen Kraftstoff mittels eines Injektors oder auch mittels beider Injektoren in den oder die Überströmkanäle eingespritzt wird, mit zunehmender Drehzahl der erfindungsgemäßen Brennkraftmaschine länger wird, also während eines größeren Teilbereichs einer vollständigen Kurbelwellenumdrehung von 360 Grad Kraftstoff mit einem Injektor oder auch mit beiden Injektoren eingespritzt wird, wodurch für den Betrieb der Brennkraftmaschine in Abhängigkeit der Motordrehzahl Kraftstoff auch im Kurbelgehäuse vorgelagert werden kann, Kraftstoff also auch dann in den oder die Überströmkanäle eingespritzt wird, wenn das Überströmfenster vom Überströmkanal in den Brennraum des Zylinders durch den sich im Zylinder zwischen dem unteren Totpunkt UT und oberen Totpunkt OT bewegenden Kolben verschlossen ist.

Es ist nach einer Weiterbildung der Erfindung auch vorgesehen, dass die Brennkraftmaschine mit einer Steuereinrichtung funktional gekoppelt oder auch versehen ist und die Steuereinrichtung zur Feststellung einer Lastanforderung an die Brennkraftmaschine ausgebildet ist und das Einspritzen von Kraftstoff mittels eines Injektors oder beider Injektoren in Abhängigkeit von der festgestellten Lastanforderung erfolgt. Über die Steuereinrichtung kann daher die vom Benutzer angeforderte Sollmotorlast oder Zielmotorlast festgestellt werden, beispielsweise über die Erfassung eines Drosselöffnungsquerschnitts eines dem Motor zur Zuführung von Ansaugluft strömungstechnisch vorgeschalteten Drosselorgans, bei dem es sich um einen Vergaser oder auch eine Drosselklappe handeln kann, und in Abhängigkeit von der festgestellten Motorlast wird dann von der Steuereinrichtung entweder ein Injektor oder beide Injektoren zur Abgabe von Kraftstoff in den Überströmkanal oder die Überströmkanäle betätigt.

Es ist nach einer Weiterbildung der Erfindung auch vorgesehen, dass die Brennkraftmaschine zur Veränderung des Beginns des Einspritzens von Kraftstoff mittels eines Injektors oder beider Injektoren und/oder der Zeitdauer der Öffnungsbetätigung des Injektors oder beider Injektoren in Abhängigkeit von der festgestellten Lastanforderung und/oder der Drehzahl der Brennkraftmaschine ausgebildet ist.

Die Brennkraftmaschine kann daher die Injektoren so betätigen, dass der Beginn des Einspritzens von Kraftstoff in den Überströmkanal oder die Überströmkanäle in Abhängigkeit von der Motorlast oder der festgestellten Lastanforderung und/oder der aktuellen Motordrehzahl der Brennkraftmaschine verändert wird. Auf der Basis der so festgestellten Betriebsparameter der erfindungsgemäßen Brennkraftmaschine kann diese also das Einspritzintervall, während dessen Kraftstoff in den Überströmkanal oder in die Überströmkanäle eingespritzt wird, innerhalb des zur Verfügung stehenden Intervalls von 360 Grad Kurbelwinkel verschieben und/oder verkürzen und/oder verlängern.

Eine Verschiebung des Einspritzintervalls in Richtung früh bedeutet dabei, dass das Einspritzintervall in einen Bereich nach dem oberen Totpunkt OT des Kolbens auf seinem Weg in Richtung zum unteren Totpunkt UT des Kolbens nach oben verschoben wird, also in Richtung zum oberen Totpunkt OT hin, während eine Verschiebung des Einspritzintervalls in Richtung spät bedeutet, dass das Einspritzintervall in einen Bereich nach dem oberen Totpunkt OT des Kolbens auf seinem Weg in Richtung zum unteren Totpunkt UT des Kolbens nach unten verschoben wird, also in Richtung zum unteren Totpunkt UT hin.

Es ist nach einer Weiterbildung der Erfindung auch vorgesehen, dass der Zylinder mit ersten und zweiten Überströmkanälen versehen ist und die zweiten Überströmkanäle relativ zum Auslass weiter beabstandet angeordnet sind als die ersten Überströmkanäle und die Injektoren zur Einspritzung von Kraftstoff in die zweiten Überströmkanäle angeordnet sind.

Auf diese Weise wird es erreicht, dass die Spülverluste verringert werden, da das Entstehen von Kurzschlussströmungen zwischen den ersten Überströmkanälen und dem Auslass des Zylinders verringert oder vermieden wird. Die Gefahr solcher Kurzschlussströmungen würde steigen, wenn der Kraftstoff in die dem Auslass näher benachbarten Überströmkanäle eingespritzt werden würde. Dies trägt zur Verringerung der HC Emissionen im Abgas der erfindungsgemäßen Brennkraftmaschine bei.

Es ist nach einer Weiterbildung der Erfindung auch vorgesehen, dass die Brennkraftmaschine eine von der Längsmittelachse des Zylinders gebildete Zylinderhochachse aufweist und jeder Injektor eine von der Längsmittelachse des Injektors gebildete Injektorhochachse aufweist und die Injektoren in einem Winkel zwischen der Zylinderhochachse und der Injektorhochachse von etwa Null Grad bis etwa 35 Grad, vorzugsweise etwa 14 Grad geneigt angeordnet sind.

Auf diese Art und Weise wird es erreicht, dass die Gefahr von Wandanlagerungen von Kraftstoff an den Kanalwänden der Überströmkanäle verringert wird, was zur Verringerung von unverbrannten Kohlenwasserstoffen im Abgas der erfindungsgemäßen Brennkraftmaschine beiträgt.

Es ist nach einer Weiterbildung der Erfindung auch vorgesehen, dass die Brennkraftmaschine eine die Zylinderhochachse einschließende Längsmittelebene - eine gedachte oder virtuelle Längsmittelebene - aufweist und eine zur Längsmittelebene im rechten Winkel stehende Quermittelebene - eine gedachte oder virtuelle Quermittelebene - aufweist und die Injektoren in eine Winkel zwischen der Längsmittelebene und der Injektorhochachse von etwa minus 8 Grad bis etwa plus 33 Grad geneigt angeordnet sind. Die Injektoren können dabei relativ zur Quermittelebene in Richtung vom Auslass weg um etwa 15 Grad nach hinten versetzt angeordnet sein.

Auch diese Konfiguration weist den Vorteil auf, dass der von den Injektoren in der Form eines Strahlkegels oder Spritzkegels in den Überströmkanal oder die Überströmkanäle eingebrachte Kraftstoff wenig oder nicht mit den Wandungen des Überströmkanals oder der Überströmkanäle in Kontakt kommt, sondern vor einem solchen möglichen Kontakt von der im Überströmkanal oder den Überströmkanälen ausgehend von der Kurbelkammer in Richtung zur Brennkammer strömenden Fluidströmung aufgelöst und mitgerissen wird. Diese Konfiguration trägt wiederum dazu bei, dass die Bildung von unverbrannten Kohlenwasserstoffen im Abgas der erfindungsgemäßen Brennkraftmaschine verringert wird.

Es ist nach einer Weiterbildung der Erfindung vorgesehen, dass die Injektoren ganz allgemein relativ zum jeweiligen Überströmkanal so angeordnet sind, dass Anlagerungen des vom Injektor in den Überströmkanal eingespritzten Kraftstoffs an der Wandung des Überströmkanals weitgehend vermieden sind. Diese Konfiguration besitzt wiederum den Vorteil, dass die Bildung von in Tropfenform vom Überstömkanal in den Brennraum gelangender Kraftstoffteilchen verringert oder vermieden wird, wodurch wieder die HC Emissionen im Abgas verringert werden können. Auch wird dadurch der spezifische Kraftstoffverbrauch der erfindungsgemäßen Zweitaktbrennkraftmaschine verringert.

Schließlich ist es nach einer Weiterbildung der Erfindung auch vorgesehen, dass der Injektor mindestens einen kegelförmigen Kraftstoffstrahl erzeugt und der Injektor relativ zum Überströmkanal zur Vermeidung von Wandanlagerungen des Kraftstoffstrahls an der Wandung des Überströmkanals ausgerichtet ist.

Die Erfindung schafft auch ein Verfahren zum Betrieb einer Zweitaktbrennkraftmaschine, die mindestens einen, mit einem Brennraum und einem Auslass versehenen Zylinder mit zwei Überströmkanälen und ein mit einer Kurbelwelle versehenes Kurbelgehäuse aufweist, welches über die Überströmkanale mit dem Brennraum strömungsverbunden ist, wobei das Verfahren die Zufuhr von Kraftstoff zur Zweitaktbrennkraftmaschine mittels zweier Injektoren umfasst und Kraftstoff mittels nur eines Injektors bei einer ersten Motorlast und mittels beider Injektoren bei einer zweiten Motorlast zugeführt wird, wobei der Kraftstoff in die Überströmkanäle weitgehend entgegen der Überströmrichtung aus dem Kurbelgehäuse in den Brennraum eingespritzt wird.

Die erste Motorlast ist dabei niedriger als die zweite Motorlast, sodass in Abhängigkeit von der Motorlast, also der Last der Brennkraftmaschine oder auch einer durch die Feststellung eines Drosselöffnungsquerschnitts eines Drosselorgans, welches der erfindungsgemäßen Brennkraftmaschine strömungstechnisch vorgeschaltet ist, festgestellten Lastanforderung an die erfindungsgemäße Brennkraftmaschine der Kraftstoff in den Überströmkanal mittels nur eines Injektors eingespritzt wird oder der Kraftstoff in die Überströmkanäle mittels beider Injektoren eingespritzt wird.

Der Betrieb der erfindungsgemäßen Brennkraftmaschine mit nur einem Injektor oder beiden Injektoren kann daher in Abhängigkeit von der Motorlast oder der festgestellten Lastanforderung hin- und her geschaltet werden, je nachdem, welche Motorlast vorliegt oder welche Lastanforderung an den Motor gestellt wird.

Die Erfindung wird im folgenden anhand der Zeichnung näher erläutert. Diese zeigt in:
Fig. 1 eine Schnittsansicht einer Einzylinder-Zweitaktbrennkraftmaschine nach einer Ausführungsform gemäß der vorliegenden Erfindung in einer Querschnittsdarstellung gemäß der Linie I-I nach Figur 2;
Fig. 2 eine Draufsichtansicht auf die Ausführungsform nach Fig. 1;
Fig. 3 eine Ansicht ähnlich derjenigen nach Fig. 1 zur Erläuterung des Sprühbilds oder Strahlbilds eines Injektors;
Fig. 4 eine Darstellung ähnlich derjenigen nach Fig. 2 ohne den Zylinderkopf;
Fig. 5 eine Schnittansicht entlang der Linie V-V nach Fig. 1;
Fig. 6 eine Schnittdarstellung entlang der Linie VI-VI nach Fig. 5;
Fig. 7 eine Draufsichtansicht auf den Zylinder der Zweitaktbrennkraftmaschine nach Fig. 1 zur Erläuterung der Lage von zwei Schnittebenen A-A und B-B für Fig. 7A und Fig. 7B;
Fig. 7A, B Schnittdarstellungen entlang der Linie A-A und B-B nach Fig. 7;
Fig. 8 eine Schnittdarstellung durch einen schematisch dargestellten Drosselklappenkörper; und
Fig. 9 eine schematische Darstellung eines Motorrads mit der erfindungsgemäßen Brennkraftmaschine.

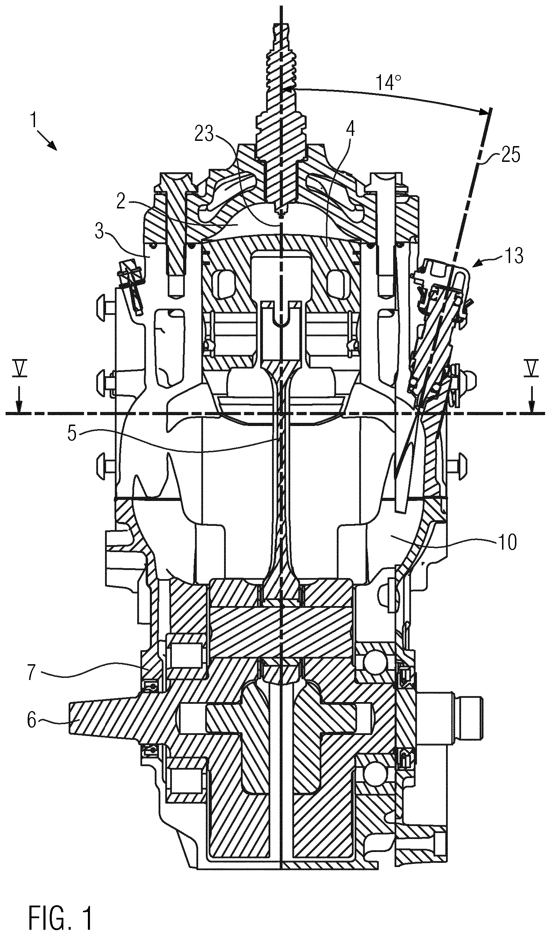

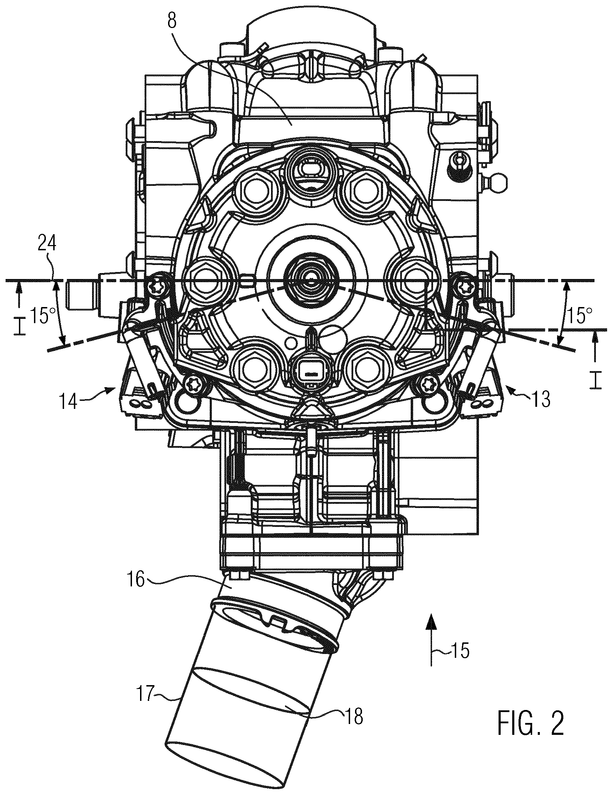

Fig. 1 der Zeichnung zeigt eine Querschnittsansicht entlang der Linie I-I nach Fig. 2 durch eine Zweitaktbrennkraftmaschine 1 nach einer Ausführungsform gemäß der vorliegenden Erfindung.

Die Zweitaktbrennkraftmaschine oder der Motor 1 weist einen Brennraum 2 auf, der in einem Zylinder 3 oberhalb eines Kolbens 4 ausgebildet ist, der über eine Pleuelstange 5 mit der Kurbelwelle 6 gekoppelt ist, welche in einem Kurbelgehäuse 7 drehbar aufgenommen ist. Der Zylinder 3 ist mit einem beispielsweise anhand von Fig. 2 ersichtlichen Auslass 8 versehen, über den Abgas entsorgt werden kann. Weitere Einzelheiten des Motors 1, wie beispielsweise eine Kupplung und eine Lichtmaschine und Motorgehäusedeckel und dergleichen sind der Vereinfachung der Zeichnung halber nicht dargestellt worden, bei einem betriebsbereit einbaufertigen Motor 1 selbstverständlich aber vorhanden.

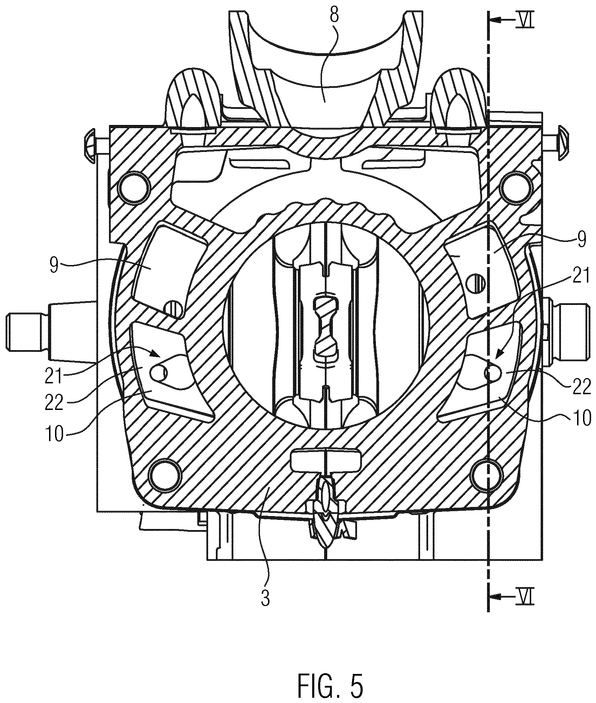

Wie es beispielsweise anhand von Fig. 5 der Zeichnung ersichtlich ist, weist der Zylinder 3 zwei erste Überströmkanäle 9 und zwei zweite Überströmkanäle 10 auf, wobei die ersten Überströmkanäle 9 näher in Richtung des Auslasses 8 angeordnet sind als die beiden zweiten Überströmkanäle 10.

Die Überströmkanäle 9, 10 sind mit der im Inneren des Kurbelgehäuses 7 ausgebildeten Kurbelkammer strömungsverbunden, sodass bei der Abwärtsbewegung des Kolbens 4 in Richtung zur Kurbelkammer bzw. dem Kurbelgehäuse 7 verdichtete Luft bzw. verdichtetes Kraftstoff-Luftgemisch aus dem Kurbelgehäuse 7 in Richtung zum Brennraum 2 strömen kann und über Überströmfenster 11 aus den Überströmkanälen 9, 10 in den Brennraum 2 eintreten kann.

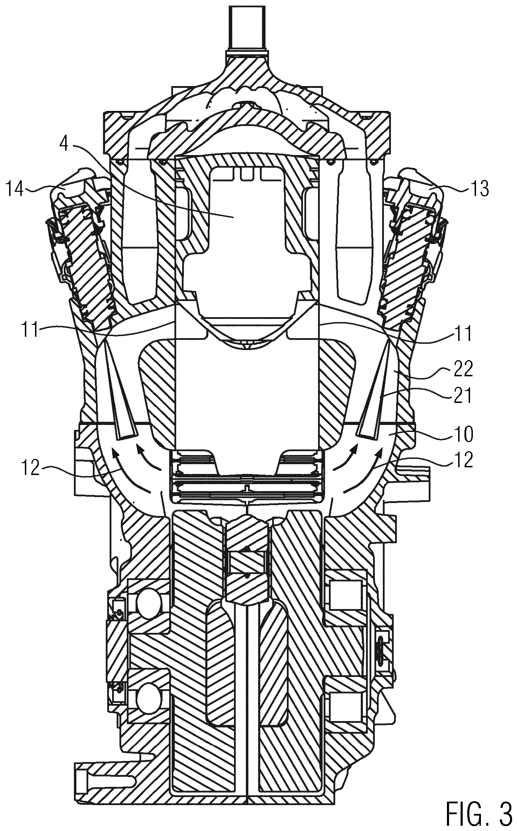

Bei der Abwärtsbewegung des Kolbens 4 in Richtung zum unteren Totpunkt UT kommt es daher zu einer Fluidströmung, welche durch die Pfeile 12 in Fig. 3 der Zeichnung dargestellt ist. Es ist dabei zu beachten, dass in Fig. 1 der Zeichnung lediglich der in der Zeichnungsebene rechte Überströmkanal 10 frei geschnitten dargestellt ist, während der in der Zeichnungsebene linke Überströmkanal 10 aufgrund des Schnittverlaufs nicht geschnitten dargestellt ist. Fig. 3 zeigt beide Überströmkanäle 10.

Wie es anhand von Fig. 2 der Zeichnung ersichtlich ist, weist der Motor 1 einen ersten Injektor 13 und einen zweiten Injektor 14 auf, wobei der erste Injektor 13 in Richtung des Pfeils 15 nach Fig. 2 betrachtet in den rechtsseitigen zweiten Überströmkanal 10 und der zweite Injektor 14 in den linksseitigen zweiten Überströmkanal 10 mündet.

Der Zylinder 3 weist also zwei Injektoren 13, 14 auf, die jeweils zum Einspritzen von Kraftstoff in den jeweiligen Überströmkanal 10 ausgebildet sind und zwar entgegen der Strömungsrichtung von Fluid aus dem Kurbelgehäuse 7 über den Überströmkanal 10 in Richtung zum Brennraum 2. Der Kraftstoff wird dabei von einer nicht näher dargestellten Kraftstoffpumpe unter einen Systemdruck von beispielsweise 3.5 bar gesetzt.

Die Brennkraftmaschine 1 kann in unterschiedlichen Lastbereichen betrieben werden, wobei die Lastbereiche von niedrigen Lasten im Bereich des Leerlaufs über mittlere Lasten bis zur Volllast reichen.

Fig. 2 der Zeichnung zeigt, dass der Motor im Einlassbereich einen Ansaugstutzen 16 aufweist, an dem ein schematisch dargestellter Drosselklappenkörper 17 mit einer zur Veränderung des Durchflussquerschnitts durch den Drosselklappenkörper 17 verschwenkbaren Drosselklappe 18 angeordnet ist, über deren Verschwenkung ein Benutzer der erfindungsgemäßen Zweitaktbrennkraftmaschine 1 eine Lastanforderung an die Zweitaktbrennkraftmaschine 1 darstellen kann.

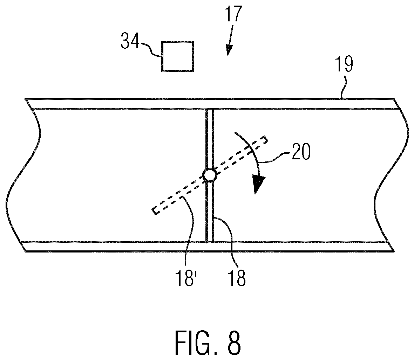

Die Drosselklappe 18 ist dabei in einem Gehäuse 19 des Drosselklappenkörpers 17 verschwenkbar aufgenommen, sodass der Benutzer über eine Verschwenkbewegung der Drosselklappe 18 in Richtung des Pfeils 20 nach Fig. 8 den von der Drosselklappe 18 freigegebenen Durchflussquerschnitt verändern kann. Da der Drosselklappenkörper 17 ein nicht näher dargestelltes Leerlaufsystem aufweist, kann ein über einen in Fig. 8 schematisch dargestellten Drehwinkelsensor 34 festgestellter Drosselklappenwinkel von 0 Grad der Leerlaufstellung entsprechen, während ein Drosselklappenwinkel von 72 Grad der mit dem Bezugszeichen 18' in Fig. 8 dargestellten Volllaststellung entspricht.

Die erfindungsgemäße Brennkraftmaschine 1 zeichnet sich dadurch aus, dass bei einer ersten Motorlast, die niedriger ist als eine zweite Motorlast, der Kraftstoff mittels nur eines Injektors 13, 14 in den Überströmkanal 10 eingespritzt wird, während bei der zweiten Motorlast der Kraftstoff mittels beider Injektoren 13, 14 in die Überströmkanäle 10 eingespritzt wird.

Es bedeutet dies mit anderen Worten, dass in Abhängigkeit von der Motorlast, mit der die Zweitaktbrennkraftmaschine 1 betrieben wird, der Kraftstoff entweder mittels nur eines Injektors 13 oder 14 in den Überstromkanal 10 eingebracht wird oder mittels beider Injektoren 13, 14 eingebracht wird, wobei zwischen den Betriebsmodi "nur ein Injektor" und "beide Injektoren" je nach Motorlast oder Lastanforderung umgeschaltet wird.

Befindet sich der Motor in einem Betriebsmodus mit nur geringer Last, wird der Kraftstoff mit nur einem Injektor 13 oder 14 in den Überströmkanal 10 eingespritzt und steigt die Motorlast an, wird ab einem drehzahlabhängigen Schwellenwert der Last auf den Betriebsmodus der Kraftstoffeinspritzung mit beiden Injektoren 13, 14 umgeschaltet. Sinkt die vom Motor dargestellte Motorlast wieder ab, kann wieder vom Betriebsmodus der Kraftstoffeinspritzung mit beiden Injektoren auf den Betriebsmodus der Kraftstoffeinspritzung mit nur einem Injektor umgeschaltet werden.

Die Motorlast kann dabei mittels einer Erfassung des im Kurbelgehäuse 7 herrschenden Kurbelgehäusedrucks erfolgen, der von der vom Benutzer des Motors 1 mittels einer Veränderung des Drosselklappenwinkels an den Motor gestellten Lastanforderung abhängt, sodass in Abhängigkeit von dem Kurbelgehäusedruck die Umschaltung zwischen der Kraftstoffzufuhr mit nur einem Injektor oder mit beiden Injektoren erfolgt.

Wird zur Kraftstoffversorgung des Motors 1 nur ein Injektor 13, 14 benötigt, so kann die Kraftstoffzufuhr durch jeweils einen der Injektoren 13, 14 alternierend erfolgen, sodass also in einem Zyklus von 360 Grad Kurbelwellenwinkel der Kraftstoff beispielsweise vom Injektor 13 eingespritzt wird, während im nachfolgenden Zyklus von 360 Grad Kurbelwellenwinkel der Kraftstoff vom anderen Injektor 14 eingespritzt wird.

Diese Vorgehensweise hat den Vorteil, dass der Bildung von Verharzungen oder Verkokungen an den Injektoren 13, 14 vorgebeugt werden kann und dass darüber hinaus die Schaltzyklen der Injektoren 13, 14 jeweils zu etwa 50 Prozent gleich verteilt werden.

Wie es anhand von Fig. 3 der Zeichnung ersichtlich ist, bildet der Injektor 13, genauso wie der Injektor 14, als Sprühbild einen Sprühkegel 21 aus, und die Injektoren sind so angeordnet, dass der Sprühkegel 21 der im Überströmkanal 10 in Richtung zum Überströmfenster 11 strömenden Fluidströmung entgegen gerichtet ausgerichtet verläuft und somit die Gefahr von Wandanlagerungen des mit dem Sprühkegel 21 ausgetragenen Kraftstoffs an der Wandung 22 des Überströmkanals 10 verringert ist. Auch wird durch die im Überströmkanal 10 herrschenden hohen Turbulenzen eine gute Kraftstoffaufbereitung erreicht, womit die HC Emissionen im Abgas verringert werden.

Fig. 5 der Zeichnung zeigt den Sprühkegel 21 in seiner Ausbildung im Überströmkanal 10 im Abstand zur Wandung 22 des Überströmkanals 10. Die Kraftstoffeinspritzung erfolgt dabei in die vom Auslass 8 beabstandeten Überströmkanäle 10 und nicht in die näher zum Auslass 8 liegenden Überströmkanäle 9, welche ebenfalls eine Fluidverbindung zur Kurbelkammer des Kurbelgehäuses 7 besitzen. Durch die auslassferne Einbringung des Kraftstoffs in die Überströmkanäle 10 wird die Bildung einer Kurzschlussströmung von Kraftstoff in Richtung zum Auslass 8 hin verringert, wodurch die Spülverluste der erfindungsgemäßen Zweitaktbrennkraftmaschine 1 verringert werden. Auch kann dadurch der spezifische Kraftstoffverbrauch des Motors verringert werden und es können die HC Emissionen reduziert werden, die sich andernfalls beim auslassnahen Einspritzen von Kraftstoff und der daraus resultierenden Wandbenetzungen der Zylinderwand im Bereich des Auslasses 8 einstellen würden.

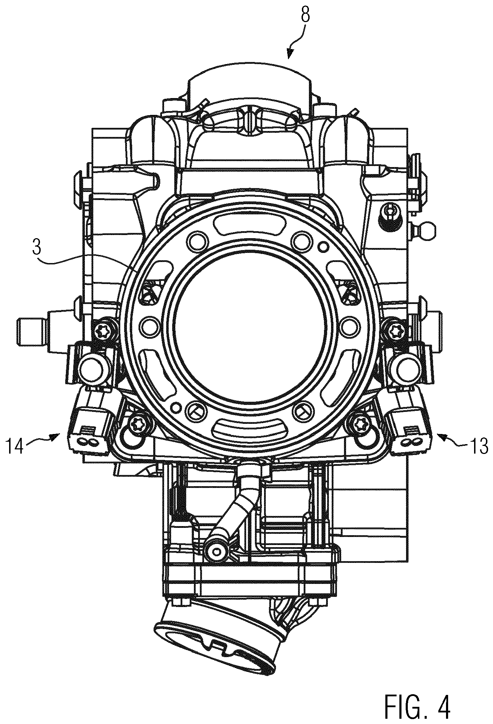

Fig. 4 zeigt die Anordnung der Injektoren 13, 14 am Zylinder 3 in einer Ansicht von oben. Wie es ohne weiteres ersichtlich ist, sind die Injektoren 13, 14 sowohl zu der aus Fig. 1 ersichtlichen Zylinderhochachse 23 als auch zu der anhand von Fig. 2 ersichtlichen Quermittelebene 24 geneigt angeordnet.

Bei der in Fig. 1 der Zeichnung dargestellten Ausführungsform des Motors 1 ist der Injektor 13, 14 mit seiner Injektorhochachse 25 relativ zur Zylinderhochachse 23 in einem Winkel von 14 Grad geneigt. Diese Konfiguration führt bei dem dargestellten Motor 1 zu der eine Wandbenetzung der Wandung 22 des Überströmkanals 10 vermeidenden Ausbildung eines Sprühkegel 21 und zwar in Verbindung mit dem Anordnung der Injektorhochachse 25 relativ zur Quermittelebene 24 von 15 Grad, wie dies anhand von Fig. 2 der Zeichnung ersichtlich ist.

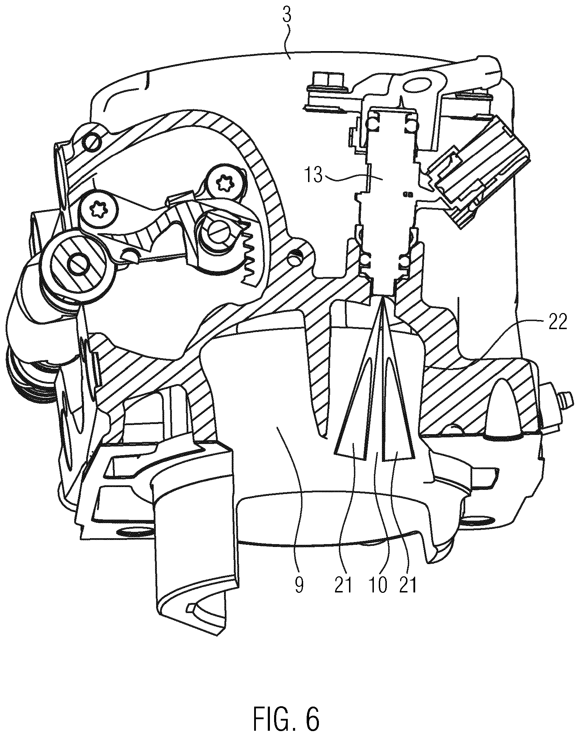

Wie es anhand von Fig. 6 der Zeichnung ersichtlich ist, kann der am Zylinder 3 angeordnete Injektor 13 oder 14 auch ein Sprühbild in der Form von zwei Sprühkegeln 21 ausbilden, die eine Wandbenetzung der Wandung 22 des Überströmkanals 10 verhindern.

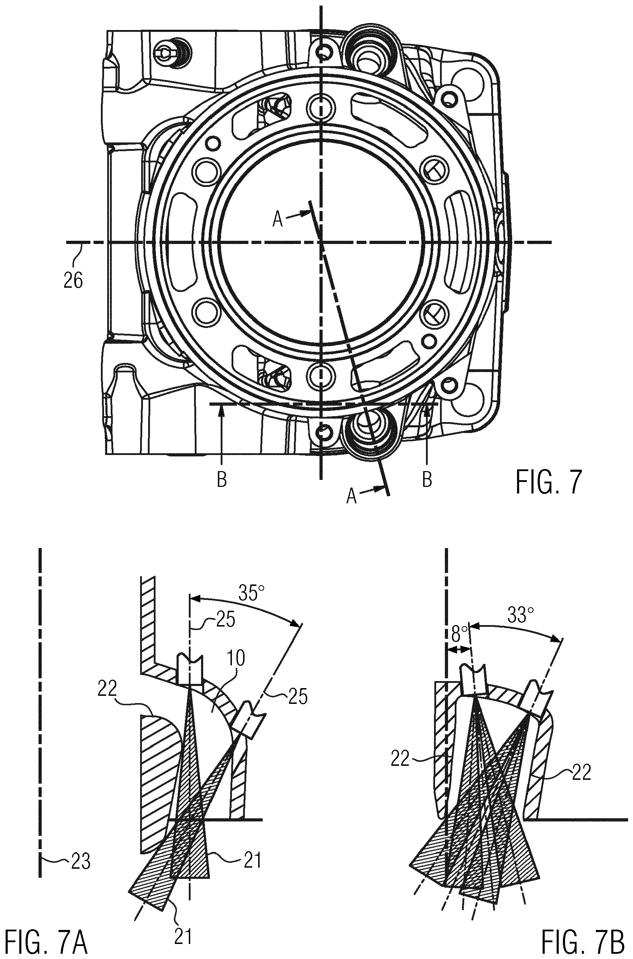

Fig. 7 der Zeichnung zeigt zwei Schnittebenen A-A und B-B zur Erläuterung des Neigungswinkel, der zwischen der Zylinderhochachse 23 und der Injektorhochachse 25 ausgebildet wird, und der in Fig. 7A dargestellt ist und zur Erläuterung des Winkels, den die Injektorhochachse 25 relativ zur Längsmittelebene 26 nach Fig. 7 ausbildet, und der in Fig. 7B dargestellt ist.

Wie es anhand von Fig. 7A dargestellt ist, kann der Injektor 13, 14 mit seiner Injektorhochachse 25 in einem Winkel von weitgehend 0 Grad bis etwa 35 Grad relativ zur Zylinderhochachse 23 geneigt angeordnet werden, sodass der Sprühkegel 21 nicht auf die Wandung 22 des Überströmkanals 10 trifft.

Fig. 7B der Zeichnung zeigt die mögliche Anordnung der Injektoren 13, 14 relativ zu einer die Zylinderhochachse 23 aufnehmenden Längsmittelebene 26, die anhand von Fig. 7 ersichtlich ist. Wie es ohne weiteres deutlich ist, können die Injektoren in einem Winkel von minus 8 Grad zur Längsmittelebene 26 angeordnet sein - ausgehend von einer durch den in Fig. 7B linksseitigen Injektor gezogenen virtuellen Längsmittelebene mit 0 Grad -, und ausgehend von diesem Winkel einen Winkelbereich von 33 Grad überdecken, ohne dass es zu Wandanlagerungen des eingespritzten Kraftstoffs an der Wandung 22 des Überströmkanals 10 kommt. Dies gilt sowohl für die in der Zeichnung dargestellten Injektoren mit einem Sprühbild mit zwei Sprühkegeln als auch für Injektoren mit einem Sprühbild mit nur jeweils einem Sprühkegel ähnlich der Darstellung in Fig. 7A.

Die erfindungsgemäße Zweitaktbrennkraftmaschine 1 zeichnet sich darüber hinaus dadurch aus, dass der Kraftstoff über einen einzelnen Injektor oder beide Injektoren während eines Teilbereichs einer vollständigen, 360 Grad Kurbelwellenwinkel entsprechenden Umdrehung der Kurbelwelle 6 eingespritzt werden kann, und zwar in Abhängigkeit vom Lastzustand des Motors und der Drehzahl des Motors.

Damit trägt die Erfindung einer Eigenheit von Zweitaktmotoren Rechnung, die sich dadurch auszeichnet, dass der Motor im Leerlaufbereich, also bei einem Drosselklappenöffnungswinkel von weitgehend 0 Grad wenig Kraftstoff benötigt und zwar über den gesamte Drehzahlbereich vom beim dargestellten Motor - mit einem Hubvolumen von 250 Kubikzentimeter - 1000 Umdrehungen pro Minute bis 11000 Umdrehungen pro Minute. Dieser gesamte Drehzahlbereich kann mit der Zuführung von Kraftstoff mittels nur eines Injektors 13, 14 abgedeckt werden und zwar selbst dann, wenn dabei mit steigender Drehzahl die minimale Injektoröffnungszeit unterschritten wird. Obwohl hier eine Zweitaktbrennkraftmaschine von 250 Kubikzentimeter Hubraum genannt wurde, ist es auch möglich, dass die Zweitaktbrennkraftmaschine ein Hubvolumen von 125, 150 oder auch 300 Kubikzentimeter besitzt.

Dies ist darauf zurückzuführen, dass der erfindungsgemäße Motor aufgrund der vorteilhaften Anordnung der Injektoren 13, 14 im Leerlaufbereich auch mit einem zudosierten Kraftstoff arbeitet, der sich der Menge nach dann einstellt, wenn der Injektor eigentlich unterhalb der Injektor-spezifischen minimalen Injektoröffnungszeit betrieben wird.

Mit zunehmender Motorlast und damit einhergehendem Anstieg des Drosselklappenwinkels steigt der Kraftstoffbedarf des Motors an. In ähnlicher Weise steigt der Kraftstoffbedarf des Motors auch mit zunehmender Motordrehzahl an. Der erfindungsgemäße Motor ist nun so ausgebildet, dass die Kraftstoffzufuhr in Abhängigkeit von der Drehzahl des Motors in einem Lastbereich von etwa 7 Prozent bis etwa 40 Prozent der Maximallast von einem Injektor auf beide Injektoren umgeschaltet wird.

Bei hoher Motordrehzahl findet also die Umschaltung der Kraftstoffzufuhr mittels eines Injektors auf die Kraftstoffzufuhr mittels beider Injektoren bereits bei einer niedrigeren Last von beispielsweise 7 Prozent der Maximallast des Motors statt, während bei niedrigen Motordrehzahlen die Umschaltung erst bei 40 Prozent der Maximallast stattfindet. Unterschreitet der Motor bei niedrigen Motordrehzahlen den Wert von 40 Prozent der Maximallast von höherer Last kommend, findet eine Umschaltung der Kraftstoffzufuhr von zwei Injektoren auf nur einen Injektor statt, während bei hohen Motordrehzahlen die Umschaltung der Kraftstoffzufuhr von beiden Injektoren auf nur einen Injektor erst bei einer Motorlast von etwa 7 Prozent der Maximallast stattfindet.

Der vorstehend bereits angesprochene Teilbereich der Kraftstoffzufuhr bezogen auf den Kurbelwellenwinkel von 360 Grad kann von etwa 5 Grad Kurbelwinkel bis etwa 350 Grad Kurbelwinkel reichen, wobei der Teilbereich bei dem in der Zeichnung dargestellten Motor 1 einen Wert von etwa 12 Grad Kurbelwellenwinkel bis etwa 305 Grad Kurbelwellenwinkel einnimmt, sodass bei einem Drosselklappenwinkel von 0 Grad die Zufuhr von Kraftstoff mittels nur eines Injektors während etwa 12 Grad Kurbelwellenwinkel ausreichend ist, während bei einem Drosselklappenwinkel von beispielsweise 72 Grad, der der Volllaststellung des Motors entspricht, der Teilbereich der Kraftstoffzufuhr mittels beider Injektoren bis zu etwa 305 Grad Kurbelwellenwinkel reichen kann, mit beiden Injektoren also Kraftstoff während eines sehr großen Teilbereichs des maximal möglichen Kurbelwellenwinkels eingetragen wird, also mit Injektoren gearbeitet werden kann, die einen relativ niedrigen spezifischen Massendurchsatz an Kraftstoff pro Sekunde von beispielsweise 2,5 g/s bereitstellen, also vergleichsweise wenig Kraftstoff pro Zeiteinheit eintragen.

Diese Konfiguration ermöglicht es, dass der Betrieb des Motors auch bei hohen Lasten und hohen Drehzahlen durch einen ausreichenden Vorhalt von Kraftstoff im Kurbelgehäuse gewährleistet ist, da der Kraftstoff nicht nur während der Öffnungszeitdauer der Überströmfenster zugeführt wird, sondern auch dann über die Überströmkanäle eingebracht wird, wenn die Überströmfenster vom Kolben verschlossen sind. Dies ermöglicht, dass trotz des vorstehend erwähnten geringen spezifischen Massendurchsatzes der Injektoren an Kraftstoff pro Sekunde, der dem niedrigen spezifischen Kraftstoffbedarf des Motors im niedrigen Teillastbereich und Leerlaufbereich entspricht, dem hohen spezifischen Kraftstoffverbrauch bei hohen Lasten und hohen Drehzahlen Rechnung getragen werden kann und bei hohen Lasten und hohen Drehzahlen eine ausreichende Kraftstoffmenge rasch im Brennraum zur Verfügung steht, womit auch bei hohen Lasten eine gute Innenkühlung des Zylinders und des Kolbens durch den im Kurbelgehäuse vorgelagerten Kraftstoff erzielt wird.

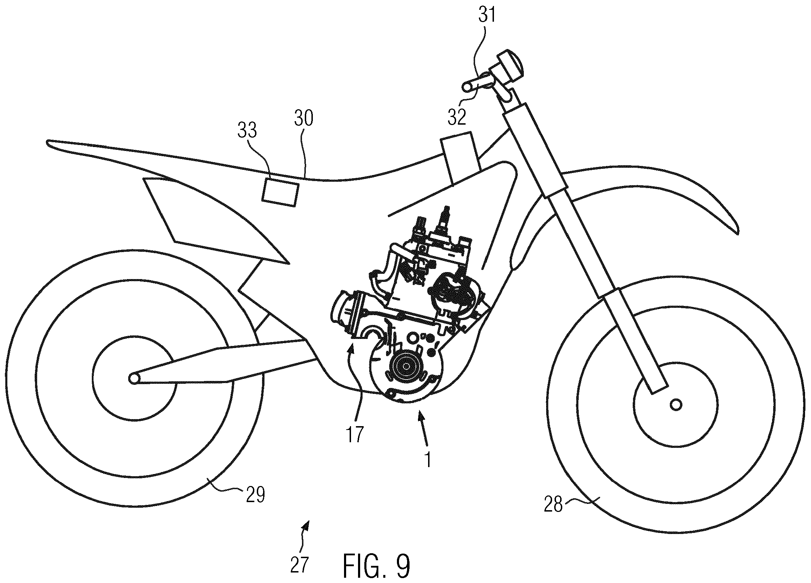

Fig. 9 der Zeichnung schließlich zeigt eine schematische Darstellung eines Motorrads 27, welches mit der erfindungsgemäßen Zweitaktbrennkraftmaschine 1 ausgestattet ist. Das Motorrads 27 besitzt ein Vorderrad 28 sowie ein Hinterrad 29 und eine Sitzfläche für den Benutzer des Motorrads in der Form eines Sattels 30. Ein auf dem Sattel 30 bzw. der Sitzbank 30 sitzender Benutzer kann das Motorrad über die Lenkstange 31 steuern und dabei über den Gasdrehgriff 32 mittels einer Seilzugs oder auch mittels drive-by-wire die Drehwinkelstellung der im Drosselklappenkörper 17 angeordneten Drosselklappe 18 beeinflussen und damit die Motorlast des Motors 1 steuern.

Wenn der Benutzer den Gasdrehgriff 32 in seiner unbetätigten Ausgangsstellung belässt, stellt sich ein Drosselklappenwinkel von weitgehend 0 Grad ein und der Motor wird über das Leerlaufsystem des Drosselklappenkörpers 17 betrieben und eine mit der Brennkraftmaschine 1 funktional gekoppelte Steuereinrichtung 33, die beim dargestellten Motorrad 27 unterhalb der Sitzbank 30 angeordnet ist, steuert die Injektoren 13, 14 so an, dass diese in alternierender Weise den für den Betrieb des Motors 1 benötigten Kraftstoff im Leerlauf durch Einspritzen in die Überströmkanäle 10 zur Verfügung stellen.

Über eine Betätigung des Gasdrehgriffes 32 durch den Benutzer des Motorrads 27 wird die an den Motor gestellte Lastanforderung verändert und es stellt sich eine veränderte Motorlast am Motor 1 ein. Die Veränderung des Drosselklappenwinkels führt zu einer Veränderung des im Kurbelgehäuse 7 gemessenen Kurbelgehäusedrucks.

Die Steuereinrichtung 33 errechnet die für den Drosselklappenwinkel benötigte Kraftstoffmenge und dosiert diese mittels eines Injektors 13, 14 oder mittels beider Injektoren 13, 14 zu, indem der Kraftstoff in die Überströmkanäle 10 eingespritzt wird und zwar entweder in alternierender Weise durch jeweils einen der beiden Injektoren oder durch beide Injektoren gleichzeitig, so dass sich die benötigte Kraftstoffmenge einstellt. Die Motorlast verändert sich in Abhängigkeit des Drosselklappenwinkels, der vom Drehwinkelsensor 34 festgestellt wird und über die Steuereinrichtung 33 wird die der Motorlast bzw. der Lastanforderung entsprechende Kraftstoffmenge ermittelt und die Öffnungsdauer des Injektors 13, 14 oder der Injektoren 13, 14 bestimmt, welche dann einem Kurbelwellenwinkel entspricht, der einem Teilbereich des einer vollständigen Umdrehung der Kurbelwelle entsprechenden Kurbelwellenwinkels entspricht.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

- 1: Zweitaktbrennkraftmaschine
- 2: Brennraum
- 3: Zylinder
- 4: Kolben
- 5: Pleuelstange
- 6: Kurbelwelle
- 7: Kurbelgehäuse
- 8: Auslass
- 9: erste Überströmkanäle
- 10: zweite Überströmkanäle
- 11: Überströmfenster
- 12: Pfeil
- 13: erster Injektor
- 14: zweite Injektor
- 15: Pfeil
- 16: Ansaugstutzen
- 17: Drosselklappenkörper
- 18: Drosselklappe
- 19: Gehäuse
- 20: Pfeil
- 21: Sprühkegel
- 22: Wandung
- 23: Hochachse
- 24: Quermittelebene
- 25: Injektorhochachse
- 26: Längsmittelebene
- 27: Motorrad
- 28: Vorderrad
- 29: Hinterrad
- 30: Sattel, Sitzbank
- 31: Lenkstange
- 32: Gasdrehgriff
- 33: Steuereinrichtung
- 34: Drehwinkelsensor

## Patentansprüche

1. Zweitaktbrennkraftmaschine (1) mit mindestens einem, mit einem Brennraum (2) und einem Auslass (8) versehenen Zylinder (3) und einem mit einer Kurbelwelle (6) versehenen Kurbelgehäuse (7), welches über mindestens einen Überströmkanal (9, 10) mit dem Brennraum (2) strömungsverbunden ist, wobei die Brennkraftmaschine (1) zwei Injektoren (13, 14) aufweist und Kraftstoff mittels nur eines Injektors (13, 14) bei einer ersten Motorlast und mittels beider Injektoren (13, 14) bei einer zweiten Motorlast einbringbar ist, **dadurch gekennzeichnet, dass** die Brennkraftmaschine (1) zwei Überströmkanäle (9, 10) pro Zylinder (3) aufweist, wobei der jeweilige Überströmkanal (9, 10) mit einem jeweiligen Injektor (13, 14) versehen ist und die Brennkraftmaschine (1) zum Einspritzen von Kraftstoff in den Überströmkanal (9, 10) weitgehend entgegen der Überströmrichtung aus dem Kurbelgehäuse (7) in den Brennraum (2) ausgebildet ist.

2. Zweitaktbrennkraftmaschine (1) nach Anspruch 1, **dadurch gekennzeichnet, dass** die Brennkraftmaschine (1) zum alternierenden Einspritzen von Kraftstoff mittels eines der beiden Injektoren (13, 14) ausgebildet ist.

3. Zweitaktbrennkraftmaschine (1) nach Anspruch 1 oder 2, **dadurch gekennzeichnet, dass** die Brennkraftmaschine (1) zum Einspritzen von Kraftstoff während eines Kurbelwellenwinkels ausgebildet ist, der einem Teilbereich einer vollständigen Umdrehung der Kurbelwelle (6) entspricht und der Teilbereich etwa 5 Grad Kurbelwellenwinkel bis etwa 350 Grad Kurbelwellenwinkel, vorzugsweise etwa 10 Grad Kurbelwellenwinkel bis etwa 330 Grad Kurbelwellenwinkel, vorzugsweise etwa 12 Grad Kurbelwellenwinkel bis etwa 305 Grad Kurbelwellenwinkel beträgt.

4. Zweitaktbrennkraftmaschine (1) nach einem der vorstehenden Ansprüche, **dadurch gekennzeichnet, dass** die Brennkraftmaschine (1) zum Einspritzen von Kraftstoff mittels nur eines Injektors (13, 14) in einem Bereich der Motorlast der Brennkraftmaschine (1) von etwa 7 Prozent bis etwa 40 Prozent der Maximallast der Brennkraftmaschine (1) ausgebildet ist.

5. Zweitaktbrennkraftmaschine (1) nach einem der vorstehenden Ansprüche, **dadurch gekennzeichnet, dass** die Brennkraftmaschine (1) zum Einspritzen von Kraftstoff während eines mit steigender Drehzahl der Brennkraftmaschine (1) zunehmenden Teilbereichs des einer vollständigen Umdrehung der Kurbelwelle (6) entsprechenden Kurbelwellenwinkels ausgebildet ist.

6. Zweitaktbrennkraftmaschine (1) nach einem der vorstehenden Ansprüche, **dadurch gekennzeichnet, dass** die Brennkraftmaschine (1) mit einer Steuereinrichtung (33) funktional gekoppelt ist und die Steuereinrichtung (33) zur Feststellung einer Lastanforderung an die Brennkraftmaschine (1) ausgebildet ist und das Einspritzen von Kraftstoff mittels eines Injektors (13, 14) oder beider Injektoren (13, 14) in Abhängigkeit von der festgestellten Lastanforderung erfolgt.

7. Zweitaktbrennkraftmaschine (1) nach Anspruch 6, **dadurch gekennzeichnet, dass** die Feststellung der Lastanforderung mittels der Bestimmung der Öffnung eines der Brennkraftmaschine (1) stromaufwärts vorgelagerten Drosselorgans (17) erfolgt.

8. Zweitaktbrennkraftmaschine (1) nach Anspruch 6 oder 7, **dadurch gekennzeichnet, dass** die Brennkraftmaschine (1) zur Veränderung des Beginns des Einspritzens von Kraftstoff mittels eines Injektors (13, 14) oder beider Injektoren (13, 14) und/oder der Zeitdauer der Öffnungsbetätigung des Injektors (13, 14) oder beider Injektoren (13, 14) in Abhängigkeit von der festgestellten Lastanforderung und/oder der Drehzahl der Brennkraftmaschine (1) ausgebildet ist.

9. Zweitaktbrennkraftmaschine (1) nach einem der vorstehenden Ansprüche, **dadurch gekennzeichnet, dass** der Zylinder (3) mit ersten (9) und zweiten (10) Überströmkanälen versehen ist und die zweiten Überströmkanäle (10) relativ zum Auslass (8) weiter beabstandet angeordnet sind als die ersten Überströmkanäle (9) und die Injektoren (13, 14) zur Einspritzung von Kraftstoff in die zweiten Überströmkanäle (10) angeordnet sind.

10. Zweitaktbrennkraftmaschine (1) nach einem der vorstehenden Ansprüche, **dadurch gekennzeichnet, dass** die Brennkraftmaschine (1) eine von der Längsmittelachse des Zylinders (3) gebildete Zylinderhochachse (23) aufweist und jeder Injektor (13, 14) eine von der Längsmittelachse des Injektors (13, 14) gebildete Injektorhochachse (25) aufweist und die Injektoren (13, 14) in einem Winkel zwischen der Zylinderhochachse (23) und der Injektorhochachse (25) von etwa Null Grad bis etwa 35 Grad, vorzugsweise etwa 14 Grad geneigt angeordnet sind.

11. Zweitaktbrennkraftmaschine (1) nach Anspruch 10, **dadurch gekennzeichnet, dass** die Brennkraftmaschine (1) eine die Zylinderhochachse (23) einschließende Längsmittelebene (26) aufweist und die Injektoren (13, 14) in einem Winkel zwischen der Längsmittelebene (26) und der Injektorhochachse (25) von etwa minus 8 Grad bis etwa plus 33 Grad geneigt angeordnet sind.

12. Zweitaktbrennkraftmaschine (1) nach einem der vorstehenden Ansprüche, **dadurch gekennzeichnet, dass** die Injektoren (13, 14) relativ zum jeweiligen Überströmkanal (10) so angeordnet sind, dass Anlagerungen des vom Injektor (13, 14) in den Überstömkanal (10) eingespritzten Kraftstoffs an der Wandung (22) des Überströmkanals (10) weitgehend vermieden sind.

13. Zweitaktbrennkraftmaschine (1) nach einem der vorstehenden Ansprüche, **dadurch gekennzeichnet, dass** der Injektor (13, 14) mindestens einen kegelförmigen Kraftstoffstrahl (21) erzeugt und der Injektor (13, 14) relativ zum Überströmkanal (10) zur Vermeidung von Wandanlagerungen des Kraftstoffstrahls (21) an der Wandung (22) des Überströmkanals (10) ausgerichtet ist.

14. Verfahren zum Betrieb einer Zweitaktbrennkraftmaschine (1), die mindestens einen, mit einem Brennraum (2) und einem Auslass (8) versehenen Zylinder (3) mit zwei Überströmkanälen (9, 10) und ein mit einer Kurbelwelle (6) versehenes Kurbelgehäuse (7) aufweist, welches über die Überströmkanale (9, 10) mit dem Brennraum (3) strömungsverbunden ist, wobei das Verfahren die Zufuhr von Kraftstoff zur Zweitaktbrennkraftmaschine (1) mittels zweier Injektoren (13, 14) umfasst und Kraftstoff mittels nur eines Injektors (13, 14) bei einer ersten Motorlast und mittels beider Injektoren (13, 14) bei einer zweiten Motorlast zugeführt wird, **dadurch gekennzeichnet, dass** der Kraftstoff in die Überströmkanäle (9, 10) weitgehend entgegen der Überströmrichtung aus dem Kurbelgehäuse (7) in den Brennraum (3) eingespritzt wird.

15. Motorrad (27) mit einem Fahrersattel (30) sowie einem Vorderrad (28) und einem Hinterrad (29), **gekennzeichnet durch** eine Zweitaktbrennkraftmaschine (1) nach einem der Ansprüche 1 bis 13.

## Claims

1. Two-stroke internal combustion engine (1) comprising at least one cylinder (3), which is provided with a combustion chamber (2) and an outlet (8), and a crankcase (7) which is provided with a crankshaft (6) and is in flow connection with the combustion chamber (2) via at least one overflow channel (9, 10), wherein the internal combustion engine (1) has two injectors (13, 14) and fuel can be introduced by means of only one injector (13, 14) in the event of a first engine load and by means of both injectors (13, 14) in the event of a second engine load, **characterised in that** the internal combustion engine (1) has two overflow channels (9, 10) per cylinder (3), wherein the respective overflow channel (9, 10) is provided with a respective injector (13, 14) and the internal combustion injection (1) is designed to inject fuel into the overflow channel (9, 10) from the crankcase (7) to the combustion chamber (2) largely counter to the overflow direction.

2. Two-stroke internal combustion engine (1) according to claim 1, **characterised in that** the internal combustion engine (1) is designed to inject fuel in an alternating manner by means of one of the two injectors (13, 14).

3. Two-stroke internal combustion engine (1) according to claim 1 or 2, **characterised in that** the internal combustion engine (1) is designed to inject fuel during a crankshaft angle which corresponds to a section of one complete revolution of the crankshaft (6) and the section is about 5 degrees crankshaft angle to about 350 degrees crankshaft angle, preferably about 10 degrees crankshaft angle to about 330 degrees crankshaft angle, preferably about 12 degrees crankshaft angle to about 305 degrees crankshaft angle.

4. Two-stroke internal combustion engine (1) according to one of the preceding claims, **characterised in that** the internal combustion engine (1) is designed to inject fuel by means of only one injector (13, 14) in a range of the engine load of the internal combustion engine (1) of about 7 per cent to about 40 per cent of the maximum load of the internal combustion engine (1).

5. Two-stroke internal combustion engine (1) according to one of the preceding claims, **characterised in that** the internal combustion engine (1) is designed to inject fuel during a section of the crankshaft angle which corresponds to one complete revolution of the crankshaft (6) and which increases as the rotational speed of the internal combustion engine (1) increases.

6. Two-stroke internal combustion engine (1) according to one of the preceding claims, **characterised in that** the internal combustion engine (1) is functionally coupled to a control device (33) and the control device (33) is designed to ascertain a load demand on the internal combustion engine (1) and fuel is injected by means of one injector (13, 14) or both injectors (13, 14) as a function of the ascertained load demand.

7. Two-stroke internal combustion engine (1) according to claim 6, **characterised in that** the load demand is ascertained by means of determining the opening of a throttle member (17) arranged upstream of the internal combustion engine (1).

8. Two-stroke internal combustion engine (1) according to claim 6 or 7, **characterised in that** the internal combustion engine (1) is designed to change the start of the injection of fuel by means of one injector (13, 14) or both injectors (13, 14) and/or the duration of the opening actuation of the injector (13, 14) or both injectors (13, 14) depending on the ascertained load demand and/or the rotational speed of the internal combustion engine (1).

9. Two-stroke internal combustion engine (1) according to one of the preceding claims, **characterised in that** the cylinder (3) is provided with first (9) and second (10) overflow channels and the second overflow channels (10) are arranged further apart relative to the outlet (8) than the first overflow channels (9) and the injectors (13, 14) are arranged for injecting fuel into the second overflow channels (10).

10. Two-stroke internal combustion engine (1) according to one of the preceding claims, **characterised in that** the internal combustion engine (1) has a cylinder vertical axis (23) formed by the longitudinal centre axis of the cylinder (3) and each injector (13, 14) has an injector vertical axis (25) formed by the longitudinal centre axis of the injector (13, 14) and the injectors (13, 14) are arranged between the cylinder vertical axis (23) and the injector vertical axis (25) inclined at an angle of about zero degrees to about 35 degrees, preferably about 14 degrees.

11. Two-stroke internal combustion engine (1) according to claim 10, **characterised in that** the internal combustion engine (1) has a longitudinal centre plane (26) enclosing the cylinder vertical axis (23) and the injectors (13, 14) are arranged between the longitudinal centre plane (26) and the injector vertical axis (25) inclined at an angle of about minus 8 degrees to about plus 33 degrees.

12. Two-stroke internal combustion engine (1) according to one of the preceding claims, **characterised in that** the injectors (13, 14) are arranged relative to the respective overflow channel (10) such that the fuel injected by the injector (13, 14) into the overflow channel (10) is largely prevented from accumulating on the wall (22) of the overflow channel (10).

13. Two-stroke internal combustion engine (1) according to one of the preceding claims, **characterised in that** the injector (13, 14) produces at least one conical jet of fuel (21) and the injector (13, 14) is oriented relative to the overflow channel (10) to prevent the jet of fuel (21) from accumulating on the wall (22) of the overflow channel (10).

14. Method for operating a two-stroke internal combustion engine (1) which comprises at least one cylinder (3), provided with a combustion chamber (2) and an outlet (8) and having two overflow channels (9, 10), and a crankcase (7) which is provided with a crankshaft (6) and is in flow connection with the combustion chamber (3) via the overflow channels (9, 10), wherein the method comprises supplying fuel to the two-stroke internal combustion engine (1) by means of two injectors (13, 14) and fuel is supplied by means of only one injector (13, 14) in the event of a first engine load and by means of both injectors (13, 14) in the event of a second engine load, **characterised in that** the fuel is injected into the overflow channels (9, 10) from the crankcase (7) to the combustion chamber (3) largely counter to the overflow direction.

15. Motorcycle (27) having a rider's seat (30) and a front wheel (28) and a rear wheel (29), **characterised by** a two-stroke internal combustion engine (1) according to one of claims 1 to 13.

## Revendications

1. Moteur à combustion interne à deux temps (1) comportant au moins un cylindre (3) pourvu d'une chambre de combustion (2) et d'une sortie d'échappement (8), et un carter (7) pourvu d'un vilebrequin (6) qui est en communication fluidique avec la chambre de combustion (2) par le biais d'au moins un canal de trop-plein (9, 10), ledit moteur à combustion interne (1) présentant deux injecteurs (13, 14) et du carburant pouvant être introduit au moyen d'un seul des injecteurs (13, 14) en présence d'une première charge du moteur et au moyen des deux injecteurs (13, 14) en présence d'une deuxième charge du moteur, **caractérisé en ce que** le moteur à combustion interne (1) présente deux canaux de trop-plein (9, 10) par cylindre (3), chaque canal de trop-plein (9, 10) étant pourvu d'un injecteur (13, 14) respectif et le moteur à combustion interne (1) étant conçu pour injecter du carburant dans le canal de trop-plein (9, 10) en grande partie à l'encontre de la direction de trop-plein, du carter (7) vers la chambre de combustion (2).

2. Moteur à combustion interne à deux temps (1) selon la revendication 1, **caractérisé en ce que** le moteur à combustion interne (1) est conçu pour injecter alternativement du carburant au moyen d'un des deux injecteurs (13, 14).

3. Moteur à combustion interne à deux temps (1) selon la revendication 1 ou 2, **caractérisé en ce que** le moteur à combustion interne (1) est conçu pour injecter du carburant pendant un angle de vilebrequin qui correspond à une plage partielle d'un tour complet du vilebrequin (6), et cette plage partielle fait d'environ 5 degrés d'angle de vilebrequin à environ 350 degrés d'angle de vilebrequin, de préférence d'environ 10 degrés d'angle de vilebrequin à environ 330 degrés d'angle de vilebrequin, de préférence d'environ 12 degrés d'angle de vilebrequin à environ 305 degrés d'angle de vilebrequin.

4. Moteur à combustion interne à deux temps (1) selon l'une des revendications précédentes, **caractérisé en ce que** le moteur à combustion interne (1) est conçu pour injecter du carburant au moyen d'un seul des injecteurs (13, 14) dans une zone de charge du moteur à combustion interne (1) faisant d'environ 7 pour cent à environ 40 pour cent de la charge maximale du moteur à combustion interne (1).

5. Moteur à combustion interne à deux temps (1) selon l'une des revendications précédentes, **caractérisé en ce que** le moteur à combustion interne (1) est conçu pour injecter du carburant pendant une plage partielle de l'angle de vilebrequin correspondant à un tour complet du vilebrequin (6) qui est croissante lorsque le régime du moteur à combustion interne (1) va en croissant.

6. Moteur à combustion interne à deux temps (1) selon l'une des revendications précédentes, **caractérisé en ce que** le moteur à combustion interne (1) est couplé de manière fonctionnelle à un organe de commande (33) et l'organe de commande (33) est conçu pour déterminer une demande de charge exercée sur le moteur à combustion interne (1), et l'injection de carburant s'effectue au moyen d'un des injecteurs (13, 14) ou bien des deux injecteurs (13, 14) en fonction de la demande de charge établie.

7. Moteur à combustion interne à deux temps (1) selon la revendication 6, **caractérisé en ce que** l'établissement de la demande de charge s'effectue par détermination de l'ouverture d'un organe d'étranglement (17) situé en amont du moteur à combustion interne (1).

8. Moteur à combustion interne à deux temps (1) selon la revendication 6 ou 7, **caractérisé en ce que** le moteur à combustion interne (1) est conçu pour faire varier le début de l'injection de carburant au moyen d'un des injecteurs (13, 14) ou des deux injecteurs (13, 14) et/ou la durée de commande d'ouverture dudit injecteur (13, 14) ou desdits deux injecteurs (13, 14) en fonction de la demande de charge établie et/ou du régime du moteur à combustion interne (1).

9. Moteur à combustion interne à deux temps (1) selon l'une des revendications précédentes, **caractérisé en ce que** le cylindre (3) est pourvu de premiers (9) et deuxièmes (10) canaux de trop-plein et les deuxièmes canaux de trop-plein (10) sont agencés à plus grande distance de la sortie d'échappement (8) que ne le sont les premiers canaux de trop-plein (9), et les injecteurs (13, 14) sont agencés pour injecter du carburant dans les deuxièmes canaux de trop-plein (10).

10. Moteur à combustion interne à deux temps (1) selon l'une des revendications précédentes, **caractérisé en ce que** le moteur à combustion interne (1) présente un axe vertical (23) constitué par l'axe médian longitudinal du cylindre (3) et chaque injecteur (13, 14) présente un axe vertical (25) constitué par l'axe médian longitudinal de l'injecteur (13, 14), et les injecteurs (13, 14) sont agencés inclinés selon un angle, entre l'axe vertical de cylindre (23) et l'axe vertical des injecteurs (25), faisant d'environ zéro degré à environ 35 degrés, de préférence environ 14 degrés.

11. Moteur à combustion interne à deux temps (1) selon la revendication 10, **caractérisé en ce que** le moteur à combustion interne (1) présente un plan médian longitudinal (26) renfermant l'axe vertical de cylindre (23) et les injecteurs (13, 14) sont agencés inclinés selon un angle, entre le plan médian longitudinal (26) et l'axe vertical des injecteurs (25), faisant d'environ moins 8 degrés à environ plus 33 degrés.

12. Moteur à combustion interne à deux temps (1) selon l'une des revendications précédentes, **caractérisé en ce que** les injecteurs (13, 14) sont agencés par rapport à leur canal de trop-plein (10) respectif de telle manière que des dépôts du carburant injecté par l'injecteur (13, 14) dans le canal de trop-plein (10) soient en grande partie évités au niveau de la paroi (22) du canal de trop-plein (10).

13. Moteur à combustion interne à deux temps (1) selon l'une des revendications précédentes, **caractérisé en ce que** l'injecteur (13, 14) produit au moins un jet de carburant conique (21) et l'injecteur (13, 14) est orienté par rapport au canal de trop-plein (10) de façon à éviter les dépôts superficiels de jet de carburant (21) sur la paroi (22) du canal de trop-plein (10).

14. Procédé d'exploitation d'un moteur à combustion interne à deux temps (1) présentant au moins un cylindre (3) présentant deux canaux de trop-plein (9, 10) et pourvu d'une chambre de combustion (2) et d'une sortie d'échappement (8), et un carter (7) pourvu d'un vilebrequin (6), qui est en communication fluidique avec la chambre de combustion (3) par le biais des canaux de trop-plein (9, 10), ledit procédé comprenant l'apport de carburant au moteur à combustion interne à deux temps (1) au moyen de deux injecteurs (13, 14) et du carburant est apporté au moyen d'un seul des injecteurs (13, 14) en présence d'une première charge du moteur et au moyen des deux injecteurs (13, 14) en présence d'une deuxième charge du moteur, **caractérisé en ce que** le carburant est injecté dans les canaux de trop-plein (9, 10) en grande partie à l'encontre de la direction de trop-plein, du carter (7) vers la chambre de combustion (3).

15. Motocycle (27) pourvu d'une selle (30) ainsi que d'une roue avant (28) et une roue arrière (29), **caractérisé par** un moteur à combustion interne à deux temps (1) selon l'une des revendications 1 à 13.
